# EUROPÄISCHE PATENTANMELDUNG

(11) **EP 4 465 004 A1**
(43) Veröffentlichungstag der Anmeldung: **20.11.2024**
(21) Anmeldenummer: 24175866.3
(22) Anmeldetag: 15.05.2024
(51) Int. Cl.: G01M 1/32, G01M 5/00

(54) **VERSCHLEISSINDIKATOR**

(30) Priorität: 15.05.2023 DE 102023112698
(71) Anmelder: FAUN Umwelttechnik GmbH & Co. KG, 27711 Osterholz-Scharmbeck (DE)
(72) Erfinder: Coulmont, Philippe, 07130 Soyons (FR)
(74) Vertreter: Regler, Markus Egid

(57) **Zusammenfassung**

Die Erfindung betrifft eine Anordnung zur Verschleißindikation an einem Verschleißbauteil (1) mit einer Bohrung (3) in dem Verschleißbauteil (1), einem in der Bohrung (3) angeordneten Stift (4) mit einem Kopf (5) und einem sich von dem Kopf (5) zumindest bereichsweise in die Bohrung (3) erstreckenden Schaft (6), wobei an dem Schaft (6) zumindest ein Detektionselement unter einer Rückstellkraft angeordnet ist, und einem an oder in einem Endbereich der Bohrung (3) beabstandet zu dem zumindest einen Detektionselement angeordneten Sensor (14) zur Erfassung des Detektionselements, wobei der Kopf (5) des Stifts (4) im Wesentlichen plan mit einer verschleißbehafteten Oberfläche (17) des Verschleißbauteils (1) angeordnet ist und der Stift (4) so ausgeführt ist, dass der Schaft (6) bei einer vorgesehenen Verschleißdicke bricht, und das Detektionselement nach dem Brechen des Schafts (6) in den Erfassungsbereich des Sensors (14) gelangt.

Damit ist es möglich, das Verschleißbauteil (1) rechtzeitig vor seinem Versagen auszutauschen.

## Beschreibung

Die Erfindung betrifft eine Anordnung zur Verschleißindikation an einem Verschleißbauteil mit den Merkmalen des Anspruchs 1.

Verschleißbauteile sind Bauteile von Fahrzeugen oder Maschinen, die stark abriebbehaftet sind. Das bedeutet, dass das Material, aus dem sie bestehen, im laufenden Betrieb abgerieben wird. Damit wird die Funktionsfähigkeit beeinträchtigt oder das Bauteil fällt sogar aus. Beispielsweise kann dies bewegliche Bauteile einer Maschine oder einer Kulissenführung betreffen, die beim Gleiten über eine Oberfläche abgerieben werden. Ist der Verschleiß zu groß, ist die vorgesehene Bewegung des Bauteil nicht mehr gewährleistet und ein Ausfall ist die Folge. Ein anderes Beispiel betrifft Blechbauteile, die als Wand oder Auskleidung eines Behälters für Schüttgut verwendet werden. Durch das Schüttgut wird die Oberfläche abgerieben, was zu Lochbildung und Rissen führt. Dadurch ist die Stabilität des Behälters nicht mehr gegeben und eine Austausch des Bauteils ist notwendig.

Durch diese Beschädigungen ist es notwendig, die betroffenen Verschleißbauteile regelmäßig zu kontrollieren und im Zweifel zu ersetzen, bevor es zu Ausfällen kommt. Da ein Ausfall im laufenden Betrieb unbedingt vermieden werden soll, müssen die Wartungsintervalle eng gesetzt werden, was zeitlichen Aufwand mit sich bringt. Daher ist es wünschenswert, bereits vor einem drohenden Ausfall den übermäßigen Verschleiß zu erkennen und das betroffene Verschleißbauteil rechtzeitig ersetzen zu können.

Aus der DE 20 2018 100 481 U1 geht ein Verschleißindikator für eine abrasiv beanspruchte Blechkonstruktion hervor. Der Verschleißindikator umfass wenigstens einen Füllkörper, in dem ein Indikatorkörper vorgesehen ist. Der Füllkörper ist in die Blechkonstruktion integriert und erfährt denselben Abrieb wie diese. Ist der Abrieb zu groß, wird der Indikatorkörper, beispielsweise ein elektrisch leitender Draht, zerstört und ein entsprechendes Signal ausgelöst, woraufhin ein Austausch der Blechkonstruktion erfolgen kann.

Ein derartiger Indikator ist aufwändig herzustellen, da der Füllkörper mit Indikatorkörper in die Blechkonstruktion gießtechnisch integriert werden muss.

Es ist die Aufgabe der vorliegenden Erfindung einen Verschleißindikator vorzuschlagen, der einfach und funktionssicher in ein Verschleißbauteil zu integrieren ist. Die Aufgabe wird gelöst durch eine Anordnung mit den Merkmalen von Anspruch 1. Vorteilhafte Ausgestaltungen sind Gegenstand der abhängigen Ansprüche.

Die Erfindung betrifft eine Anordnung zur Verschleißindikation an einem Verschleißbauteil mit einer Bohrung in dem Verschleißbauteil, einem in der Bohrung angeordneten Stift mit einem Kopf und einem sich von dem Kopf zumindest bereichsweise in die Bohrung erstreckenden Schaft, wobei an dem Schaft zumindest ein Detektionselement unter einer Rückstellkraft angeordnet ist, und einem an oder in einem Endbereich der Bohrung beabstandet zu dem zumindest einen Detektionselement angeordneten Sensor zur Erfassung des Detektionselements, wobei der Kopf des Stifts im Wesentlichen plan mit einer verschleißbehafteten Oberfläche des Verschleißbauteils angeordnet ist und der Stift so ausgeführt ist, dass der Schaft bei einer vorgesehenen Verschleißdicke bricht, und das Detektionselement nach dem Brechen des Schaftes in den Erfassungsbereich des Sensors gelangt.

Das Verschleißbauteil kann aus einem metallischen oder einem Kunststoffmaterial gefertigt sein. Es kann sich dabei um ein einteiliges, materialeinheitliches Bauteil handeln, aber auch um einen Zusammenbau mehrerer einzelner Komponenten. Das Verschleißbauteil weist eine Bohrung in der Oberfläche auf, die unter dem Abrieb leidet. In der Bohrung ist ein Stift angeordnet, an dessen Schaft, der in die Bohrung hineinragt, wiederum ein Detektionselement angeordnet ist. Wird nun die Oberfläche des Verschleißbauteils abgerieben, geschieht das ebenfalls mit dem Kopf des Stifts. Dieser ist daher im Wesentlichen plan mit der Oberfläche. Dabei muss die Oberfläche des Kopfes nicht zwingend fluchtend mit der Oberfläche des Verschleißbauteils liegen. Es muss gewährleistet sein, dass der Abrieb beider Komponenten gleichmäßig erfolgt oder zumindest der Bruch des Schaftes dann erfolgt, wenn eine vorgesehen Verschleißdicke des Verschleißbauteils erreicht ist. Vorteilhafterweise weisen der Kopf oder der gesamte Stift ähnliche oder die gleichen Abriebeigenschaften wie das Verschleißbauteil auf. Der Stift kann also aus metallischem und/oder Kunststoffmaterial gefertigt werden.

Das Detektionselement ist unter einer Rückstellkraft an dem Schaft, zweckmäßigerweise unterhalb des Kopfes angeordnet. Das bedeutet, dass eine Kraft auf das Detektionselement wirkt, die jedoch zunächst noch durch eine Gegenkraft kompensiert wird. Erst durch das Brechen des Schaftes wird das Detektionselement beweglich und durch die Rückstellkraft in der Bohrung auf den Sensor zugetrieben. Der Bruch erfolgt, sobald der Kopf überwiegend oder ganz abgerieben ist, vorzugsweise unterhalb des Kopfes. Zweckmäßigerweise ist das Detektionselement daher etwas beabstandet zu dem Kopf angeordnet.

Der Sensor erfasst das Detektionselement und das resultierende Signal wird an das Bedienpersonal oder eine Steuerungsinstanz ausgegeben und ein Austausch des Verschleißbauteils kann rechtzeitig in die Wege geleitet werden, ohne dass es zu unvorhergesehenen Ausfällen kommt. Damit wird der Wartungsaufwand reduziert. Ausfallzeiten können besser geplant werden und die Verschleißbauteile müssen nicht auf absolute Sicherheit hin ausgelegt werden, was zumeist mit erhöhtem Materialaufwand und damit Mehrkosten verbunden ist. Gleichzeitig ist der Sensor geschützt vor Verschmutzung und Umwelteinflüssen, so dass keine dadurch hervorgerufene Fehlfunktionen zu befürchten sind. Die Anordnung ist zudem einfach in eine Vielzahl möglicher Bauteile zu integrieren, etwa in Verschleißblechen von Schüttgutfahrzeugen oder Abfallsammelfahrzeugen oder auch in beweglichen Führungselementen in diesen Fahrzeugtypen.

Vorteilhafterweise ist das Detektionselement form-, reib- oder stoffschlüssig an dem Schaft angeordnet. Das erleichtert den Zusammenbau der Anordnung und es ist gewährleistet, dass das Detektionselement beim Einsetzen des Stiftes in die Bohrung am vorgesehenen Ort angeordnet wird.

Weiterhin bevorzugt ist der Kopf form-, reib- oder stoffschlüssig in der Bohrung gehalten. Damit wird erreicht, dass der Stift verliersicher in der Bohrung an der vorgesehenen Stelle gehalten wird. Besonders bevorzugt weist der Kopf ein Gewinde auf und wird in die Bohrung geschraubt, was den Zusammenbau der Anordnung vereinfacht.

Eine weitere Ausführung der Erfindung sieht vor, dass der Kopf zylinderförmig ist und einen sich parallel zu dem Schaft erstreckenden Kragen aufweist. Damit lässt sich der Kopf sehr gut in die Bohrung einpassen. Um den Stift stabil in der Bohrung zu halten ist eine bestimmte Mindestmanteloberfläche des Kopfes notwendig. Allerdings darf gegebenenfalls die Dicke des Kopfes ein Maximalmaß nicht überschreiten, um die Funktion des Stiftes nicht zu beeinträchtigen. Durch den Kragen wird eine Oberfläche geschaffen, die ausreichend groß ist, um die Verbindung zur Innenwand der Bohrung herzustellen, sei es als Klebefläche oder für ein Gewinde oder in anderer Weise.

Bevorzugt weist der Kopf eine Höhe H auf, die im Wesentlichen der Verschleißdicke des Verschleißbauteils entspricht. Die Verschleißdicke entspricht der Dicke des abgeriebenen Materials, bei deren Überschreiten das Bauteil ausgetauscht werden soll. Da der Kopf parallel zu dem Verschleißbauteil abgerieben wird, erfolgt der Bruch des Schaftes spätestens dann, wenn der Kopf fast oder ganz abgerieben ist, mithin die Verschleißdicke des Verschleißbauteils erreicht ist. Damit wird der Verschleißindikator zum richtigen Zeitpunkt ausgelöst und das Bauteil immer rechtzeitig ausgetauscht.

Weiterhin bevorzugt umgreift eine Klammer den freien Endabschnitt des Schafts und ist mit diesem vorzugsweise formschlüssig verbunden. Die Klammer stützt den Schaft gegenüber der Innenwand der Bohrung ab und verleiht der Anordnung zusätzliche Stabilität und erleichtert auch das Einsetzen des Stifts in die Bohrung. Durch den Formschluss mit dem Schaft ist die Klammer verliersicher an dem Schaft gehalten. Um den Zusammenbau zu erleichtern, ist die Klammer besonders bevorzugt zweiteilig ausgeführt, um den Formschluss realisieren zu können.

Besonders bevorzugt ist der Schaft über die Klammer form-, reib- oder stoffschlüssig in der Bohrung gehalten. Auch das dient der Stabilität der Anordnung, da dadurch der Stift verliersicher in der Bohrung gehalten wird.

Eine vorteilhafte Ausgestaltung der Erfindung sieht zudem vor, dass als Detektionselement ein Magnet oder ein elektrisch leitendes Element unter einer Rückstellkraft an dem Schaft angeordnet ist. Ein solches Detektionselement ist einfach in der gewünschten Form herstellbar, im Zusammenbau einfach anzuordnen und durch entsprechende Sensoren sehr gut detektierbar. Bei dem Sensor kann es sich beispielsweise um einen Reedkontakt oder einen induktiven Sensor handeln.

Weiterhin bevorzugt wird die Rückstellkraft für das Detektionselement durch ein Federelement erzeugt. Dabei kann es sich beispielsweise um eine Spiralfeder oder ein Gummielement handeln, dass vorgespannt ist. Durch den Bruch des Schaftes wird die Vorspannung gelöst und das an dem Federelement angeordnete Detektionselement durch das sich entspannende Federelement beschleunigt.

In einer weiteren Ausgestaltung der Erfindung sind zwei Magnete beabstandet und gegenpolig an dem Schaft angeordnet sind, von denen einer das Detektionselement bildet. Die Rückstellkraft entspricht in diesem Fall der abstoßenden Magnetkraft zwischen den gegenpolig angeordneten Magneten. Das bringt den Vorteil mit sich, dass keine weiteren Vorrichtungen für das Erzeugen der Rückstellkraft vorzusehen sind. Vielmehr werden die magnetischen Eigenschaften der Komponenten selbst genutzt.

Vorteilhafterweise ist die Anordnung so ausgestaltet, dass der das Detektionselement bildende Magnet durch die abstoßende Kraft zwischen den Magneten in den Erfassungsbereich des Sensors gelangt. Durch den Bruch des Schaftes wird der Detektionsmagnet beweglich, während der andere Magnet bevorzugt in Ruhe bleibt. Durch die Abstoßung zwischen den beiden gegenpolig angeordneten Magneten wird der Detektionsmagnet in den Erfassungsbereich des Sensors bewegt. Vorteilhafterweise ist hier kein weiteres Bauteil notwendig, um die Bewegung des Detektionselements zu bewirken.

Bevorzugt umgibt zumindest einer der Magnete den Schaft ringförmig. Besonders bevorzugt umgibt der als Detektionselement vorgesehene Magnet den Schaft ringförmig. Dadurch wird einerseits beim Zusammenbau die Anordnung des Magneten an dem Schaft erleichtert. Aber auch im zusammengebauten Zustand ist dadurch gewährleistet, dass der oder die Magneten sicher an der vorgesehenen Position gehalten werden.

Weiterhin kann vorgesehen sein, dass die Magnete derart an dem Schaft angeordnet sind, dass sie sich gegenseitig durch eine zwischen ihnen abstoßend wirkende Magnetkraft gegen den Kopf und gegen ein an dem Schaft angeordnetes Widerlager drücken. Um die Magneten im betriebsbereiten Zustand an der vorgesehenen Position zu halten, werden die inhärent wirkenden Kräfte ausgenutzt. Der ohnehin vorhandene Kopf bildet ein Widerlager, das gegen die abstoßende Magnetkraft wirkt. Das Widerlager für den anderen - als Detektionselement ausgebildeten - Magnet kann beispielsweise eine Auskragung oder Verdickung des Schafts oder ein Anbauteil sein.

Besonders vorteilhaft bildet die Klammer das Widerlager für einen der Magnete, insbesondere für den als Detektionselement ausgebildeten Magneten. Damit wird eine weitere Funktion in die Klammer integriert.

In einer weiteren Ausgestaltung der Erfindung ist der Sensor in einer Ausnehmung in der Wand der Bohrung angeordnet. Dabei kann es sich um eine zweite Bohrung handeln, aber auch um einen Rücksprung in der Wandung oder dergleichen. Damit ist gewährleistet, dass der Sensor einen definierten Abschnitt im Endbereich der Bohrung erfasst. Zudem ist der Sensor zusätzlich vor Verschmutzung und Beschädigung geschützt.

Vorzugsweise ist ein Nutzfahrzeug, etwa ein Abfallsammelfahrzeug, eine Straßenreinigungsfahrzeug, ein Kranfahrzeug oder ein Fahrzeug zum Transport mit Schüttgut mit einer erfindungsgemäßen Anordnung ausgestattet.

Dort kann die Erfindung in vielfältiger Weise eingesetzt werden, beispielsweise in Verschleiß- und Schutzblechen, die beispielsweise durch Schüttgut mechanisch belastet werden, oder in beweglichen Führungselementen, die an einer Kulisse oder in Schienen gleiten.

Die nachfolgenden Figuren zeigen ein Ausführungsbeispiel der Erfindung mit weiteren Merkmalen. Gleiche Merkmale sind mit denselben Bezugszeichen versehen. Es zeigen:
- Figur 1:: eine Anordnung zur Verschleißindikation in einem Gleitklotz für ein Abfallsammelfahrzeug in einer perspektivischen Darstellung,
- Figur 2:: eine Anordnung zur Verschleißindikation in einem Gleitklotz für ein Abfallsammelfahrzeug in einer Explosionsdarstellung,
- Figur 3:: eine Anordnung zur Verschleißindikation in einem Gleitklotz für ein Abfallsammelfahrzeug in einer Schnittdarstellung,
- Figur 4:: einen erfindungsgemäßen Stift in einer Detaildarstellung.

In dem Ausführungsbeispiel ist eine erfindungsgemäße Anordnung in einem üblicherweise aus einem Kunststoff gefertigter Gleitklotz 1 als Verschleißbauteil 1 integriert. Der Gleitklotz 1 ist üblicherweise mit Komponenten des Ladewerks eines Abfallsammelfahrzeugs verbunden. Der Gleitklotz 1 läuft in einer Führungsschiene, wodurch die Bewegung eines Teils des Ladewerks geführt wird. Auf den Gleitklotz 1 wirken große Kräfte, die zu Verschleiß führen. Er muss ausgetauscht werden, bevor der Verschleiß zu groß wird und eine saubere Bewegung des Ladewerks nicht mehr gegeben ist oder das Ladewerk komplett ausfällt. Insbesondere ein Ausfall während einer Müllsammeltour muss vermieden werden.

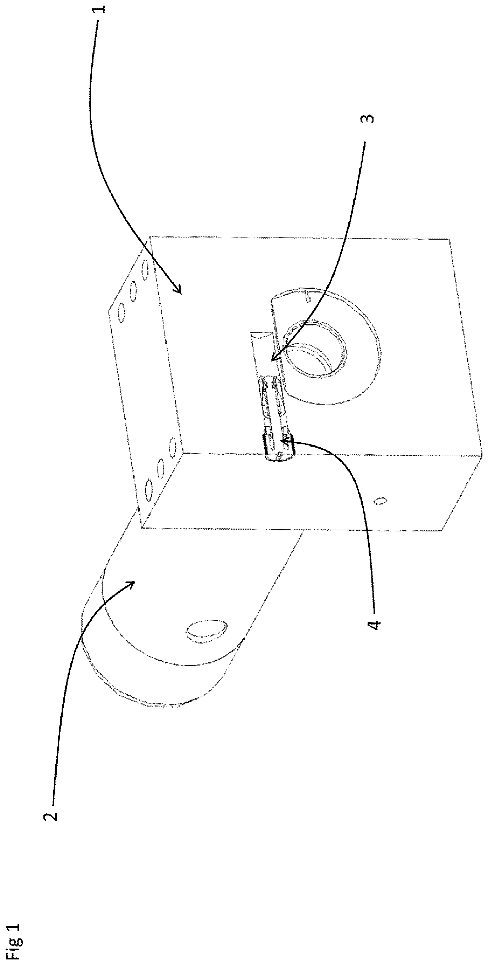

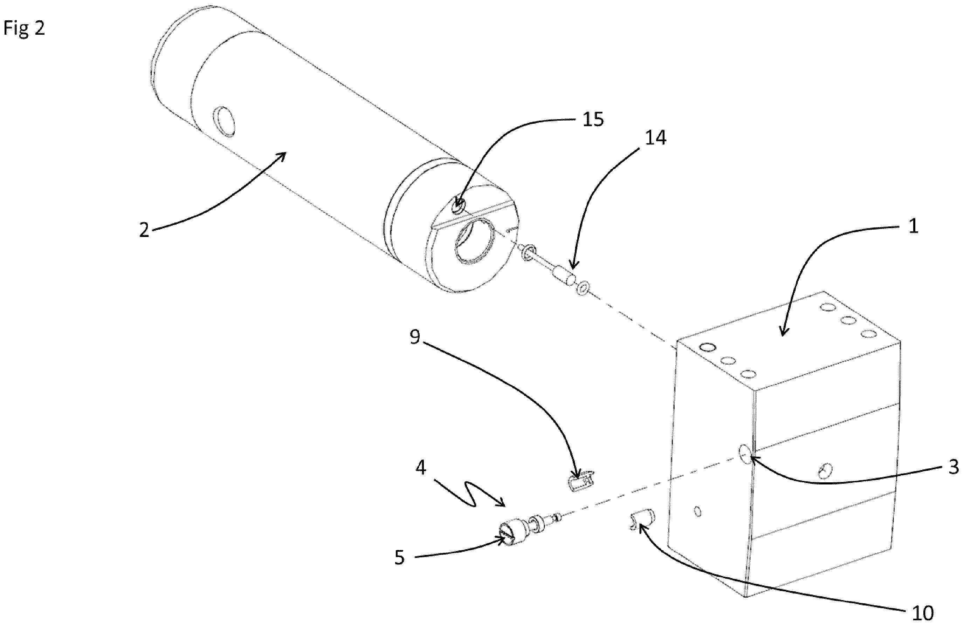

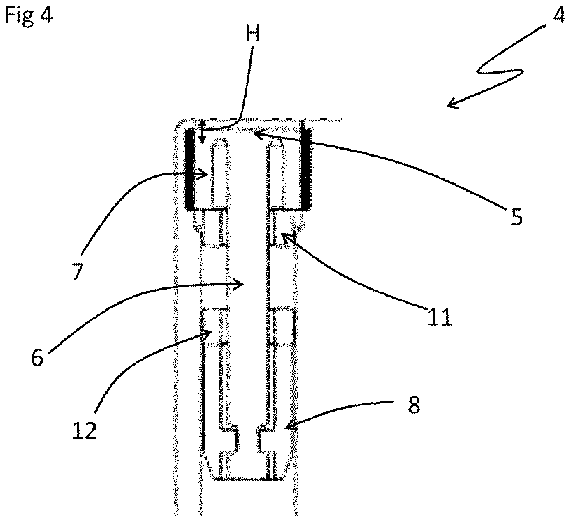

In Fig. 1 ist der Gleitklotz 1 zusammen mit einer Achse 2 perspektivisch dargestellt. In dem Gleitklotz 1 ist eine erste Bohrung 3 hergestellt, in der der Stift 4 angeordnet ist. Der Stift 4 ist in Fig. 4 vergrößert dargestellt. Der Stift 4 weist einen Kopf 5 und einen Schaft 6 auf. Von dem zylindrischen Kopf 5 erstreckt sich ein Kragen 7 parallel zu dem Schaft 6. Am anderen Ende des Schafts 6 ist eine Klammer 8 angeordnet, die formschlüssig mit dem Schaft 6 verbunden ist. Die Klammer 8 weist in ihrer Innenwand einen ringförmigen Vorsprung auf, der in eine korrespondierende Nut des Schafts 6 eingreift. In der Explosionsdarstellung in Fig. 2 wird deutlich, dass die Klammer 8 aus zwei Klammerteilen 9, 10 besteht. Beim Zusammenbau der Anordnung oder des Stiftes 4 werden die beiden Klammerteile 9, 10 an dem Schaft angebracht, um den Formschluss herzustellen.

Der Stift 4 ist durch den Kopf 5 und die Klammer 8 in der Bohrung 3 gehalten. Der Kopf 5 des Stifts 4 weist ein Außengewinde auf, wodurch der Stift in die Bohrung 3 eingeschraubt werden kann. Dadurch wird der Stift 4 verliersicher in der Bohrung 3 gehalten und der Innenraum der Bohrung 3 zudem vor Schmutz und Spritzwasser geschützt.

An dem Schaft 6 sind zwei ringförmige Magnete 11, 12 beabstandet und gegenpolig angeordnet. Die zwischen den Magneten 11, 12 wirkende abstoßende Magnetkraft drückt den ersten Magneten 11 gegen den Kopf 5 und den zweiten Magneten 12 gegen die Klammer 8, die jeweils ein Widerlager bilden, die der Magnetkraft entgegenwirken. Die Magnetkraft stellt gleichzeitig die Rückstellkraft für den zweiten Magneten 12 dar, der als Detektionselement fungiert.

Der Schaft 6 erstreckt sich bereichsweise in die Bohrung 3 hinein. An dem Endbereich 13 der ersten Bohrung 3 ist ein Sensor 14 angeordnet. Dieser ist in einer zweiten Bohrung 15 angebracht, die sich durch die Achse 2 erstreckt, die wiederum in eine Tasche 16 in dem Gleitklotz 1 eingreift. Der Abstand zwischen dem Sensor 14 und der ersten Bohrung 3 ist so gering, dass der in den Erfassungsbereich des Sensors 14 gelangende zweite Magnet 12 erfasst werden kann.

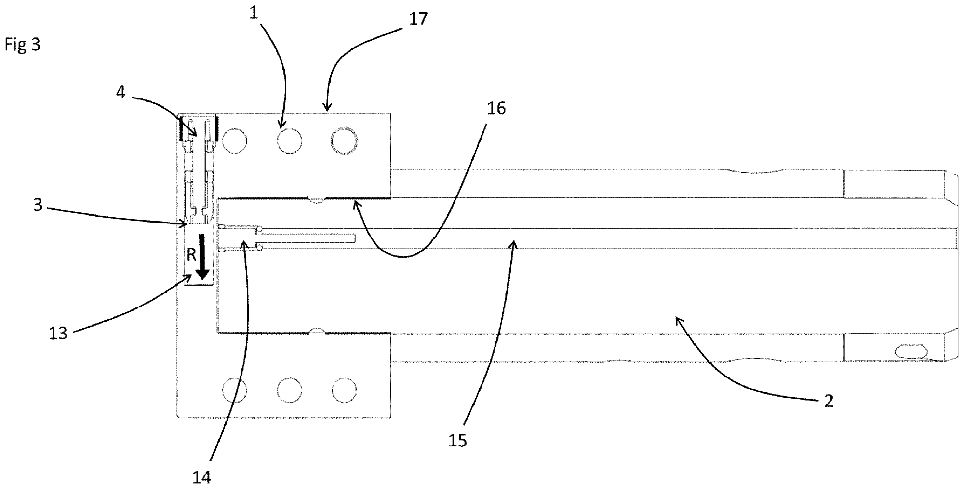

Der Kopf 5 des Stifts 4 ist plan mit der Oberfläche 17 des Gleitklotzes 1, die von Verschleiß betroffen ist. Die Höhe H des Kopfes 5 entspricht der vorgesehenen Verschleißdicke des Gleitklotzes 1. Der Kopf 5 wird gemeinsam mit der Oberfläche 17 abgerieben. Sobald die die Oberfläche 17 um die Verschleißdicke abgerieben ist, ist auch der Kopf 5 verschlissen und der Schaft 6 bricht. Der Schaft 6 und mit ihm der zweite Magnet 12 sind in der Folge beweglich in der ersten Bohrung 3. Getrieben durch die Magnetkraft bewegt sich der zweite Magnet 12 entlang einer Bewegungsrichtung R durch die erste Bohrung 3 in den Erfassungsbereich des Sensors 14 (siehe Fig. 3). Dieser sendet ein Signal an eine Steuerungseinrichtung, die entweder das Bedienpersonal auf das auszutauschende Bauteil hinweist oder direkt in einer Planungsinstanz einen Wartungstermin für das Fahrzeug vorsieht.

### Bezugszeichen

- 1: Gleitklotz
- 2: Achse
- 3: erste Bohrung
- 4: Stift
- 5: Kopf
- 6: Schaft
- 7: Kragen
- 8: Klammer
- 9: Klammerteil
- 10: Klammerteil
- 11: erster Magnet
- 12: zweiter Magnet
- 13: Endbereich von 3
- 14: Sensor
- 15: zweite Bohrung
- 16: Tasche
- 17: Oberfläche von 1
- H: Höhe von 5
- R: Bewegungsrichtung

## Patentansprüche

1. Anordnung zur Verschleißindikation an einem Verschleißbauteil (1) mit einer Bohrung (3) in dem Verschleißbauteil (1),
einem in der Bohrung (3) angeordneten Stift (4) mit einem Kopf (5) und einem sich von dem Kopf (5) zumindest bereichsweise in die Bohrung (3) erstreckenden Schaft (6),
wobei an dem Schaft (6) zumindest ein Detektionselement unter einer Rückstellkraft angeordnet ist,
und einem an oder in einem Endbereich der Bohrung (3) beabstandet zu dem zumindest einen Detektionselement angeordneten Sensor (14) zur Erfassung des Detektionselements,
wobei der Kopf (5) des Stifts (4) im Wesentlichen plan mit einer verschleißbehafteten Oberfläche (17) des Verschleißbauteils (1) angeordnet ist und der Stift (4) so ausgeführt ist, dass der Schaft (6) bei einer vorgesehenen Verschleißdicke bricht, und das Detektionselement nach dem Brechen des Schafts (6) in den Erfassungsbereich des Sensors (14) gelangt.

2. Anordnung nach Anspruch 1 **dadurch gekennzeichnet, dass** das zumindest eine Detektionselement form-, reib- oder stoffschlüssig an dem Schaft (6) angeordnet ist.

3. Anordnung nach Anspruch 1 oder 2 **dadurch gekennzeichnet, dass** der Kopf (5) form-, reib- oder stoffschlüssig in der Bohrung (3) gehalten ist.

4. Anordnung nach einem der Ansprüche 1 bis 3 **dadurch gekennzeichnet, dass** der Kopf (5) zylinderförmig ist und einen sich parallel zu dem Schaft (6) erstreckenden Kragen (7) aufweist.

5. Anordnung nach einem der Ansprüche 1 bis 4 **dadurch gekennzeichnet, dass** der Kopf (5) eine Höhe H aufweist, die im Wesentlichen der Verschleißdicke des Verschleißbauteils entspricht.

6. Anordnung nach einem der Ansprüche 1 bis 5 **dadurch gekennzeichnet, dass** eine Klammer (8) den freien Endabschnitt des Schafts (6) umgreift und mit diesem vorzugsweise formschlüssig verbunden ist.

7. Anordnung nach Anspruch 6 **dadurch gekennzeichnet, dass** der Schaft (6) über die Klammer (8) form-, reib- oder stoffschlüssig in der Bohrung (3) gehalten ist.

8. Anordnung nach einem der Ansprüche 1 bis 7 **dadurch gekennzeichnet, dass** als Detektionselement ein Magnet (11,12) oder ein elektrisch leitendes Element unter einer Rückstellkraft an dem Schaft (6) angeordnet ist.

9. Anordnung nach einem der Ansprüche 1 bis 8 **dadurch gekennzeichnet, dass** die Rückstellkraft für das Detektionselement durch ein Federelement erzeugt wird.

10. Anordnung nach einem der Ansprüche 1 bis 8 **dadurch gekennzeichnet, dass** zwei Magnete (11,12) beabstandet und gegenpolig an dem Schaft (6) angeordnet sind, von denen einer das Detektionselement bildet.

11. Anordnung nach Anspruch 10 **dadurch gekennzeichnet, dass** diese so ausgestaltet ist, dass der das Detektionselement bildende Magnet (12) durch die abstoßende Kraft zwischen den Magneten (11,12) in den Erfassungsbereich des Sensors (14) gelangt.

12. Anordnung nach einem der Ansprüche 10 oder 11 **dadurch gekennzeichnet, dass** zumindest einer der Magnete (11,12) den Schaft (6) ringförmig umgibt.

13. Anordnung nach einem der Ansprüche 10 bis 12 **dadurch gekennzeichnet, dass** die Magnete (11,12) derart an dem Schaft (6) angeordnet sind, dass sie sich gegenseitig durch eine zwischen ihnen abstoßend wirkende Magnetkraft gegen den Kopf (5) und gegen ein an dem Schaft (6) angeordnetes Widerlager drücken.

14. Anordnung nach Anspruch 13 **dadurch gekennzeichnet, dass** die Klammer (8) das Widerlager für einen der Magnete (11,12) bildet.

15. Anordnung nach einem der Ansprüche 1 bis 14 **dadurch gekennzeichnet, dass** der Sensor (14) in einer Ausnehmung in der Wand der Bohrung (3) angeordnet ist.
